Europäisches Patentamt

European Patent Office

Office européen des brevets

(19)

(11) Veröffentlichungsnummer: **0 288 886**
**B1**

(12) **EUROPÄISCHE PATENTSCHRIFT**

(45) Veröffentlichungstag der Patentschrift:
**17.10.90**

(21) Anmeldenummer: **88106284.8**

(22) Anmeldetag: **20.04.88**

(51) Int. Cl.⁵: **B60S 1/44**

(54) Scheibenwischeranlage.

(30) Priorität: **29.04.87 DE 3714224**

(43) Veröffentlichungstag der Anmeldung:
**02.11.88 Patentblatt 88/44**

(45) Bekanntmachung des Hinweises auf die Patenterteilung:
**17.10.90 Patentblatt 90/42**

(84) Benannte Vertragsstaaten:
**ES FR GB IT SE**

(56) Entgegenhaltungen:
AT-B- 184 461
GB-A- 887 114
US-A- 1 672 136

(73) Patentinhaber: **SWF Auto-Electric GmbH, Stuttgarter Strasse 119 Postfach 135,
D-7120 Bietigheim-Bissingen(DE)**

(72) Erfinder: **Baumgarten, Peter, Theodor-Heuss-Str. 22,
D-7141 Steinheim 2(DE)**
Erfinder: **Egner-Walter, Bruno, Käferflugstrasse 43,
D-7100 Heilbronn(DE)**
Erfinder: **Prohaska, Hans, Nelkenweg 44,
D-7120 Bietigheim-Bissingen(DE)**
Erfinder: **Schmid, Eckhardt, Heilbronner Strasse 62,
D-7129 Brackenheim(DE)**
Erfinder: **Teutsch, Melitta, Metterstrasse 10,
D-7140 Ludwigsburg(DE)**

**Beschreibung**

Die Erfindung betrifft eine Scheibenwischeranlage mit den im Oberbegriff des Anspruchs 1 aufgeführten Merkmalen.

Eine derartige Scheibenwischeranlage ist beispielsweise aus der GB-A 887 114 bekannt. Die Scheibenwischeranlage besitzt als Dichtung zwei einander gegenüberliegend angeordnete und am Rahmen angenietete Gummistreifen, die mit freistehenden Kanten an zwei einander gegenüberliegenden Längsflächen des im Querschnitt etwa rechteckigen Mitnehmers für den Scheibenwischer anliegen und die an den zwei einander gegenüberliegenden Längsseitenkanten dieses Mitnehmers anliegen. Diese Art der Dichtung erfüllt keine erhöhten Anforderungen. Zumindest nach einer längeren Gebrauchsdauer ist eine Abnutzung der Kanten der Gummidichtung zu befürchten. Dann können Eis oder Schnee in den Rahmen eindringen und die Bewegbarkeit des Antriebsgliedes und damit des Scheibenwischers behindern.

Aufgabe der Erfindung ist es, eine Scheibenwischeranlage der eingangs genannten Art zu schaffen, die möglichst langfristig und jederzeit eine gute Scheibenreinigung gewährleistet und außerdem möglichst vorteilhaft aussieht.

Diese Aufgabe wird erfindungsgemäß von einer Scheibenwischeranlage mit den im kennzeichnenden Teil des Anspruchs 1 aufgeführten Merkmalen gelöst. Bei dieser Scheibenwischeranlage liegen an zwei verschiedenen Stellen der Längserstreckung des Mitnehmers Dichtungselemente an. Demgemäß ist hier die Dichtungssicherheit mindestens doppelt so groß wie bei der zuvor beschriebenen Scheibenwischeranlage. Die erfindungsgemäße Dichtung ermöglicht nämlich nicht nur die zuvor beschriebene Mehrfachabdichtung, sondern bringt oder ermöglicht, da sie einen Hohlraum einschließt, weitere Vorteile. So ist davon auszugehen, daß in dem von der Dichtung eingeschlossenen Hohlraum und damit vor dem Antriebsglied bereits dann ein relativ warmes Klima herrscht, wenn ein Luftkissen vorhanden ist. Demgemäß ist dann keine allzugroße Auswirkung eines kalten Außenklimas auf das Antriebsglied zu befürchten und daher auch bei kalter Witterung ein sicherer Antrieb des Scheibenwischers möglich. Wenn die Dichtung außerdem gemäß einem der Ansprüche 3 bis 9 richtig als Heizungsschlauch dient, ist mit noch größerer Sicherheit jederzeit die einwandfreie Funktion des Antriebsgliedes und damit des Scheibenwischers gewährleistet.

Dabei muß die Dichtung selbstverständlich nicht genau hohlzylindrisch ausgebildet sein und der Mitnehmer die Dichtung nicht genau diametral durchdringen. Es ist lediglich darauf zu achten, daß der Mitnehmer die Dichtung nicht sehr nahe der Wandung durchdringt, damit beidseitig von ihm jeweils eine Hohlraumkammer vorliegt, die die oben genannten Effekte gewährleistet bzw. ermöglicht.

Aber auch die in Anspruch 2 vorgeschlagene Zusatzfunktion als der Dichtung als Wasserablaufschlauch bringt allein oder zusätzlich zur vorgenannten Zusatzfunktion Heizungsschlauch Vorteile. So kann gegebenenfalls im Inneren der Dichtung gebildetes Kondenswasser aufgrund von deren hohlzylindrischer Ausbildung schnell abfließen. Gegebenenfalls kann dieser Abfluß durch Durchleiten eines gasförmigen Mediums, insbesondere wie in Anspruch 7 vorgeschlagen, durch das Durchleiten von Druckluft beschleunigt werden. Diese kann gegebenenfalls vom Fahrtwind abgeleitet werden.

Wenn die Dichtung außerdem gemäß Anspruch 10 oder 11 ausgebildet ist, ist ein noch besseres Abdichten gewährleistet.

Die in Anspruch 12 vorgeschlagene Fertigung der Dichtung und/oder des Führungsrahmens aus einem geräuschdämpfenden Material ist insbesondere dann angebracht, wenn die Scheibenwischeranlage für ein Kraftfahrzeug vorgesehen ist. Der Fahrer wird dann nicht durch unnötige laute Scheibenwischer-Antriebsgeräusche vom Verkehrsgeschehen abgelenkt.

Die Geräuschdämmwirkung der Dichtung kann noch durch die in Anspruch 13 aufgezeigte Maßnahme verbessert werden, weil die Dichtung mit Streifen großflächiger ist und demgemäß besser geräuschdämpfend wirken kann als eine ohne solche(n) Streifen.

Durch die in den Ansprüchen 14 und 15 aufgezeigten Weiterbildungen kann sowohl der Schutz des Antriebsgliedes vor Witterungseinflüssen als auch das Aussehen der Scheibenwischeranlage verbessert werden.

Die in Anspruch 16 vorgeschlagene Verbindung zwischen Dichtung und Führungsrahmen gewährleistet jederzeit die sichere Lage der Dichtung.

Bei der in Anspruch 18 aufgezeigten Scheibenwischeranlage ist eine besonders sichere Führung des Scheibenwischers gewährleistet. Im Gegensatz zu einer Scheibenwischeranlage, deren Scheibenwischer am unteren Ende der einen nach oben aus einem Führungsrahmen geführten Mitnehmer mit dem Antriebsglied verbunden ist, kann hier aufgrund der gewählten Austrittslage kaum Wasser oder Eis zum Antriebsglied gelangen und dessen und damit die Funktion des Scheibenwischers behindern.

Wenn für eine derart ausgebildete Scheibenwischeranlage dennoch eine Dichtung im Bereich des Mitnehmers für das untere Ende des Scheibenwischers gewünscht wird, wird vorgeschlagen, die Dichtung wie an sich bekannt, gemäß Anspruch 20 als zwei einander gegenüberliegend angeordnete Streifen auszubilden. In Anspruch 21 ist eine einfache und sichere Befestigungsmöglichkeit für eine solche Dichtung aufgezeigt. Mit dem gemäß Anspruch 22 ausgebildeten Führungsrahmen wird zusätzlich eine Geräuschdämmung erreicht.

Die in Anspruch 19 vorgeschlagene beidendige Scheibenwischerführung trägt zur weiteren Erhöhung der Betriebssicherheit der Scheibenwischeranlage bei.

Wenn bei einer Scheibenwischeranlage mit beidendiger Scheibenwischerführung die in Anspruch 24 vorgeschlagene Maßnahme verwirklicht wird, kann der negative Einfluß fertigungsbedingter Toleranzen der Scheibenwischeranlageteile und/oder der Scheibe auf die Scheibenwischerführung ausgeschlossen werden.

Weitere vorteilhafte Einzelheiten und Ausgestaltungen der Erfindung sind aus den übrigen Unteransprüchen sowie der nachfolgend erläuterten Zeichnung ersichtlich, die ein Ausführungsbeispiel zeigt.

Dabei ist dargestellt in

Fig. 1 ein Querschnitt durch den oberen Bereich einer Horizontalwischeranlage mit beidendig geführtem Scheibenwischer und in

Fig. 2 der untere Bereich dieser Wischeranlage im Querschnitt.

Die in den Figuren dargestellte Scheibenwischeranlage ist als sogenannte Horizontalwischeranlage ausgebildet und an der Frontscheibe 10 eines Kraftfahrzeuges 11 vorgesehen.

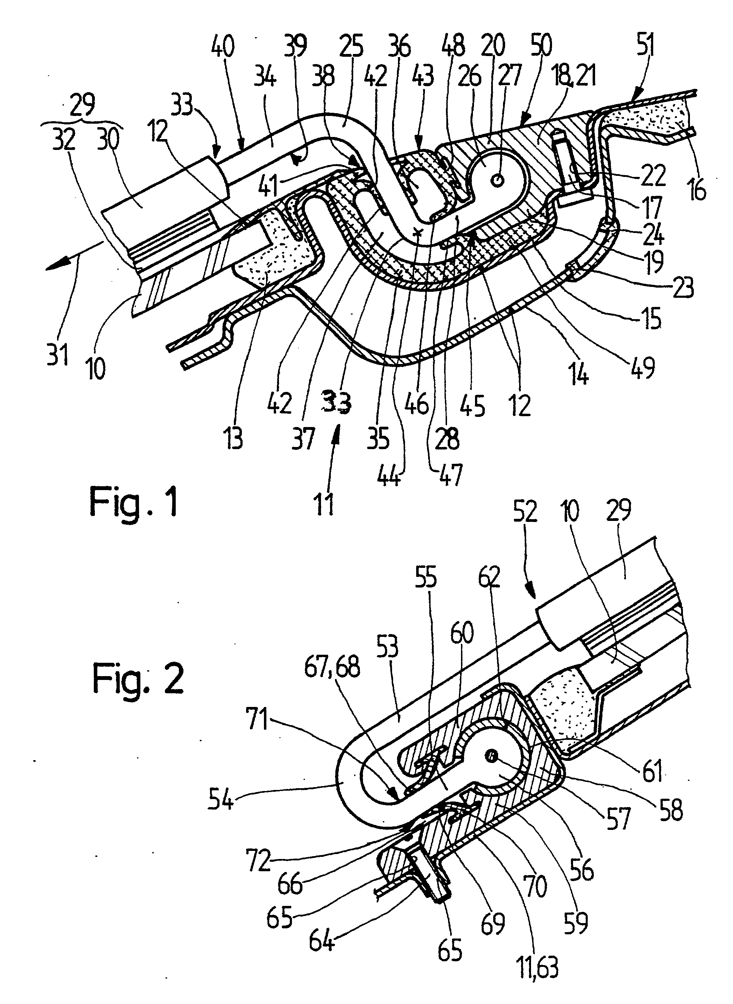

Das Kraftfahrzeug 11 besitzt oberhalb der Frontscheibe 10 einen in Richtung der Breitenerstreckung verlaufenden, wannenartigen, im Querschnitt im wensentlichen U-förmigen, nach außen hin offenen, mehrwandigen Dachrahmen 12. Am unteren Bereich des Dachrahmens 12 ist die Frontscheibe 10 mittels einer Scheibendichtung 13 auf herkömmliche Weise gehalten. Im oberen Bereich des Dachrahmens 12 sind dessen Innenwand 14 und dessen Außenwand 15 durch eine Einlage 16 auf Abstand voneinander gehalten. An der Außenwand 15 ist mittels mehrerer Schrauben, von denen in Fig. 1 eine, die mit dem Bezugzeichen 17 bezeichnet ist, dargestellt ist, ein etwa U-förmiger, in Richtung der Scheibe 10 hin offener Führungsrahmen 18 gehalten. Der Führungsrahmen 18 besitzt zwei Schenkel 19 und 20, die durch eine Krümmung 21 miteinander verbunden sind, welche wesentlich dicker als die Schenkel 19 und 20 ausgebildet ist. Die Schrauben 17 sind in koaxiale Bohrungen 22 eingeschraubt, welche in der Krümmung 21 des Führungsrahmens 18 und in der Außenwand 15 vorgesehen sind. Zugänglich sind die Schrauben 17 durch in der Innenwand 14 des Dachrahmens 12 vorgesehene Durchbrüche 23, die mittels Stopfen 24 verschlossen sind.

Der Führungsrahmen 18 dient zur Führung eines nicht dargestellten in seiner Längsrichtung antreibbaren Antriebsgliedes, an dem ein in Seitenansicht etwa Z-förmiger Mitnehmer 25 an seinem zylindrischen Kopf 26, dessen Achse 27 in Richtung der Breitenerstreckung des Mitnehmers 25 entlang dessen Z-Schenkel 28 verläuft, befestigt ist. Mittels des Antriebsgliedes kann über den Mitnehmer 25 ein Scheibenwischer 29 linear über die Scheibenbreite hin- und herbewegt werden, der einen sich über die Scheibenhöhe erstreckenden Tragbügel 30 besitzt, der zwei sich in Scheibenwischerlängsrichtung 31 nebeneinander erstreckende Gummiwischleisten hält, von denen eine, die mit dem Bezugszeichen 32 bezeichnet ist, dargestellt ist, und die auf der Scheibe 10 aufliegen. An seinem oberen Ende 33 ist der Scheibenwischer 29 über eine nicht dargestellte Zapfenverbindung, die aus einem sich in Scheibenwischerlängsrichtung 31 erstreckenden, am sich ebenfalls in diese Richtung 31 erstreckenden Z-Schenkel 34 des Mitnehmers 25 vorgesehenen Zapfen und einem länger als der Zapfen ausgebildeten, im Tragbügel 30 des Scheibenwischers 29 vorgesehenen Sackloch besteht, mit dem Mitnehmer 25 verbunden. Der Zweck dieser Zapfenverbindung wird später erläutert werden.

Wie die Fig. 1 weiter zeigt, verläuft im Dachrahmen 12 unterhalb und entlang des Führungsrahmens 18 und damit des Antriebsgliedes eine etwa als Hohlzylinder ausgebildete bzw. schlauchartige Dichtung 35. Diese Dichtung 35 ist luftgefüllt und wirkt demgemäß wie Luftkissen. Weiterhin liegt aufgrund der auf Abstand verlaufenden Dachrahmenwände 14 und 15 noch ein Luftkissen vor. Daher ist keine allzugroße Auswirkung eines kalten Außenklimas auf das Antriebsglied zu befürchten und somit auch bei kalter Witterung ein sicherer Antrieb des Scheibenwischers 29 möglich. Der Mitnehmer 25 ragt im wesentlichen nach oben aus dem Dachrahmen 12 heraus. Er durchdringt dabei die Dichtung 35 etwa diametral. Demgemäß besitzt die Dichtung 35 in dem Bereich, wo sich der Mitnehmer 25 gerade befindet, beidseitig von dessen Längserstreckung, die im wesentlichen der Scheibenwischerlängsrichtung 31 entspricht, jeweils eine luftgefüllte Hohlraumkammer 36 bzw. 37. Demgemäß ist der Mitnehmer 25 sehr gut wärmeisoliert. Es ist demgemäß zu erwarten, daß bei in mitteleuropäischen Breiten üblichen Klimaverhältnissen jederzeit ein sicherer Scheibenwischerantrieb möglich ist. Für Kraftfahrzeuge, die zur Verwendung in nordeuropäischen Ländern vorgesehen sind, oder sicherheitshalber, kann aber auch ein flüssiges oder gasförmiges Heizmedium in der Dichtung 35 vorgesehen bzw. zur Durchleitung durch diese vorgesehen werden und/oder es können ein oder mehrere Heizdrähte oder dergleichen in der Dichtung 35 vorgesehen werden, so daß sie auch als Heizungsschlauch wirkt. Wenn ein stationäres flüssiges oder gasförmiges Heizmedium vorgesehen ist, müssen die nicht dargestellten Enden der Dichtung 35 selbstverständlich dicht verschlossen sein. Für strömende Medien ist eine Kreislaufsystemausbildung in der bzw. durch die Dichtung 35 hindurch sinnvoll, weil das sowohl Energie- als auch Materialersparnis mit sich bringt. Anderenfalls wird vorgeschlagen, die Dichtungsenden mittels Klappenventilen oder dergleichen zu verschließen. Dann kann problemlos bei Bedarf ein strömendes Heizmedium durch die Dichtung 35 geleitet werden und es ist ansonsten die zuvor beschriebene Wärmeisolierung mittels Luft gegeben. Bei derart ausgestalteten Dichtungen 35 oder aber auch bei Dichtungen ohne Ventile kann auch sich gegebenenfalls in der Dichtung 35 sammelndes Kondenswasser mittels Druckluft, die auf einfache Weise vom Fahrtwind abgeleitet sein kann, schnell entfernt werden. Die Dichtung 35 kann demgemäß auch als Wasserablaufschlauch dienen. Wenn eine solche Verwendung vorgesehen ist, ist es sinnvoll, die Dichtungsenden in einer derartigen Lage vorzusehen, daß die Wasserableitung nicht über die Scheibe 10 erfolgt, um einen vermeidbaren Betrieb der Scheibenwischeranlage zu umgehen.

Unabhängig von einer zuvor beschriebenen Zusatzfunktion dichtet die Dichtung 35 aufgrund ihrer hohlzylindrischen Gestalt den Mitnehmer 25 hervorragend vor Witterungseinflüssen ab. Im Austrittsbereich 38 des Mitnehmers 25 aus der Dichtung 35 ist diese in Umfangsrichtung über einen gewissen Teil geschlitzt, so daß sie hier an den beiden Längsflächen 39 und 40 des Mitnehmers 25 mit jeweils zwei auf Abstand zueinander verlaufenden Lappen 41 und 42 anliegt. Dabei liegen die weiter außen liegenden Lappen 41 mit ihren Enden dicht an den Längsflächen 39 und 40 des Mitnehmers 25 an. Sie sind kürzer als die weiter innenliegenden Lappen 42. Diese Lappen 42 sind von der Außenmantelfläche 43 der Dichtung 35 her zu deren gedachten Achse 44 hin ins Dichtungsinnere abgebogen und liegen demgemäß mit Längsflächen großflächig und eng an den Längsflächen 39 und 40 des Mitnehmers 25 an. Diese spezielle Ausgestaltung der hohlzylindrischen Dichtung 35 bewirkt ein besonders sicheres Abdichten.

Im Eintrittsbereich 45 des Mitnehmers 25 in die Dichtung 35 ist eine etwas einfachere Abdichtung vorgesehen, die genügt, weil hier über der Dichtung 35 der Führungsrahmen 18 liegt. Im Eintrittsbereich 45 liegt die Dichtung 35 mit zwei ungeschlitzten, zur gedachten Achse 44 hin umgebogenen Lappen 46 und 47 eng an den Längsflächen 39 und 40 des Mitnehmers 25 an.

Die Lappen 41, 42, 46 und 47 erstrecken sich über die ganze Länge der Dichtung 35. An den Stellen, wo sich der Mitnehmer 25 gerade nicht befindet, liegen die Lappen 42 sowie die Lappen 46 und 47 federnd aneinander an.

Zur Befestigung am Führungsrahmen 18 ist im oberen Bereich der Außenmantelfläche 43 der Dichtung 35 ein im Querschnitt etwa T-förmiger Fortsatz 48 einstückig angeformt, der sich über die gesamte Länge der Dichtung 35 erstreckt. An diesem Fortsatz 48 ist die Dichtung 35 in eine entsprechend geformte, endseitig offene Nut eingeschoben worden, die in das Ende des äußeren Schenkels 20 des Führungsrahmens 18 eingelaassen ist, der aus einem weniger elastischen Material als die Dichtung 35, aber ebenso wie diese aus einem geräuschdämpfenden Material gefertigt ist. Aufgrund der Materialelastizität von Fortsatz 48 und Führungsrahmen 18 liegt somit zwischen diesen Teilen 48 und 18 und damit zwischen Dichtung 35 und Führungsrahmen 18 eine Rastverbindung vor.

Weiterhin ist im hinteren Bereich der Außenmantelfläche 43 der Dichtung 35 ein im wesentlichen rechteckiger Streifen 49 an die Dichtung 35 angeformt, der sich über deren gesamte Länge erstreckt. Dieser Streifen 49 hintergreift den inneren Schenkel 19 des Führungsrahmens 18. Insgesamt werden somit durch die Dichtung 35 und den Führungsrahmen 18 beim Scheibenwischerantrieb entstehende Geräusche wesentlich gedämpft. Der Fahrer des Kraftfahrzeugs 11 wird demgemäß nicht unnötig vom Verkehrsgeschehen abgelenkt.

Aufgrund der eingangs beschriebenen versenkten Anordnung von Scheibenwischeranlagenelementen im Dachrahmen 12 des Kraftfahrzeugs sieht die Scheibenwischeranlage auch formschön aus. Dazu trägt besonders bei, daß sowohl die Außenmantelfläche 43 der Dichtung 35 als auch die Außenfläche 50 des Führungsrahmens 18 in der gleichen Ebene wie der vom Dachrahmen 12 gebildete Wannenrand 51 verlaufen.

Wie die Figur 2 zeigt, ist der Scheibenwischer 29 an seinem unteren Ende 52 an einem Schenkel 53 eines in Seitenansicht etwa U-förmigen Mitnehmers 54 befestigt. Dieser besitzt einen sich entlang dessen anderen Schenkels 55 erstreckenden zylindrischen Kopf 56, dessen Achse 57 in Richtung der Breitenerstreckung des Mitnehmers 54 verläuft. Über diesen Mitnehmerkopf 56 ist der Scheibenwischer 29 mit dem gleichen Antriebsglied verbunden wie mit dem anderen Mitnehmer 25. Das Antriebsglied und der Mitnehmer 53 sind hier in einem sich in Breitenrichtung des Kraftfahrzeugs 11 erstreckenden, aus einem geräuschdämpfenden, elastischen Material bestehenden Führungsrahmen 58 geführt, welcher ähnlich wie der zuvor beschriebene Führungsrahmen 18 ausgebildet ist und zwei Schenkel 59 und 60 besitzt, die durch eine Krümmung 61 miteinander verbunden sind. Die Krümmung 61 ist mit einer Gleiteinlage 62 ausgekleidet. Der Führungsrahmen 58 ist an einem im Querschnitt U-förmigen, knapp unterhalb der Scheibe 10 verlaufenden Karosserieabschnitt 63 des Kraftfahrzeugs 11 befestigt. Dazu dienen mehrere Schrauben, von denen in Fig. 2 eine, die mit den Bezugszeichen 64 bezeichnet ist, gezeigt ist. Die Schrauben 64 sind in koaxiale Bohrungen 65 eingeschraubt, welche in dem Schenkel 59 und in dem Karosserieabschnitt 63 vorgesehen sind. Die Schrauben 64 sind von außen zugänglich.

Wichtig ist hier, daß der Führungsrahmen 58 nach unten hin offen ist und demgemäß der Mitnehmer 54 nach unten aus dem Führungsrahmen 58 herausragt. Aufgrund dieser Mitnehmeraustrittslage kann hier kaum Wasser oder Eis zum Antriebsglied gelangen und dessen und damit die Funktion des Scheibenwischers 29 behindern. Trotzdem ist sicherheitshalber im Austrittsbereich 66 des Mitnehmers 54 für das untere Ende 52 des Scheibenwischers 29 eine Dichtung 67 vorgesehen. Diese Dichtung 67 ist aber einfacher als die zuvor beschriebene Dichtung 35 ausgebildet. Sie besteht lediglich aus zwei einander gegenüberliegend angeordneten Streifen 68 und 69 aus elastischem Material. Die Streifen 68 und 69 sind so lang wie der Führungsrahmen 58. Im Querschnitt sind sie etwa T-förmig. An ihrem oberen Ende 70 sind die Streifen 68 und 69 in Nuten befestigt, die in die Innenseiten der Schenkel 59 und 60 des Führungsrahmens 58 eingelassen sind. Die Streifen 68 und 69 sind dabei in Längsrichtung in die endseitig offenen Nuten eingeschoben worden. Aufgrund der Materialelastizität von Streifen 68, 69 und Führungsrahmen 58 liegen somit zwischen diesen Teilen 68 und 58 bzw. 69 und 58 Rastverbindungen vor. Im übrigen liegen die Streifen 68 und 69 dicht an den Längsflächen 71 und 72 des Mitnehmerschenkels 55 an. An den Stellen, wo sich der Mitnehmer 54 gerade nicht befindet, liegen die Streifen 68 und 69 federnd aneinander an. Somit ist eine hervorragende Abdichtung des Mitnehmers 54 und des Antriebsgliedes gegen Witterungseinflüsse gewährleistet.

Die beschriebene Befestigung und Führung des Scheibenwischers 29 an beiden Enden 33 und 52 ist dabei besonders sicher. Wie zuvor erwähnt, ist am oberen Ende 33 des Scheibenwischers 29 und am Mitnehmer 25 eine Zapfenverbindung vorgesehen. Diese ermöglicht eine gegenseitige lagerichtige Positionierung zwischen Scheibenwischer 29 und Mitnehmer 25 bei deren Montage und damit die Vermeidung eines negativen Einflusses fertigungsbedingter Toleranzen der Scheibenwischeranlagenteile 25 und 54 bzw. der Scheibe 10.

Weiterhin ist durch die beidendige Führung des Scheibenwischers 29 gewährleistet, daß dieser selbst bei sehr hohen Fahrzeuggeschwindigkeiten nicht unerwünscht vom Fahrtwind von der Scheibe 10 abgehoben werden kann.

Abschließend sei darauf hingewiesen, daß die Scheibenwischeranlage nicht unbedingt als Horizontalwischeranlage ausgebildet zu sein braucht. Ebenso ist sie als Vertikalwischeranlage ausbildbar. Dann sollten beidseitig der Scheibe 10 Dichtungen vorgesehen sein, die gleich oder ähnlich der Dichtung 35 ausgebildet sind.

Weiterhin sei darauf hingewiesen, daß die Anwendung der Scheibenwischeranlage nicht auf Kraftfahrzeuge beschränkt ist. Ebenso kann sie an Gebäuden Anwendung finden. Da hier eine Geräuschdämmung weniger wichtig als bei Kraftfahrzeugen ist, braucht hier der Führungsrahmen und/oder die Dichtung nicht unbedingt aus Geräuschdämmaterial bestehen.

## Patentansprüche

1. Scheibenwischeranlage mit wenigstens einem Scheibenwischer (29), welcher mittels eines sich quer zur Scheibenwischerlängsrichtung erstreckenden Antriebsgliedes wenigstens annähernd linear hin- und herbewegbar ist, wobei das Antriebsglied in einem Rahmen geführt ist und der Scheibenwischer (29) wenigstens an einem Ende über einen aus dem Rahmen ragenden Mitnehmer (25) mit dem Antriebsglied verbunden ist und wobei im Austrittsbereich des Mitnehmers aus dem Rahmen eine Dichtung (35) vorgesehen ist, dadurch gekennzeichnet, daß die Dichtung (35) wenigstens annähernd als Hohlzylinder ausgebildet ist, der vom Mitnehmer (25) wenigstens annähernd diametral durchdrungen wird.

2. Scheibenwischeranlage nach Anspruch 1, dadurch gekennzeichnet, daß die Dichtung (35) zusätzlich als Wasserablaufschlauch dient.

3. Scheibenwischeranlage nach Anspruch 1 oder 2, dadurch gekennzeichnet, daß die Dichtung (35) zusätzlich als Heizungsschlauch dient.

4. Scheibenwischeranlage nach Anspruch 2 oder 3, dadurch gekennzeichnet, daß sich in dem von der Dichtung (35) umschlossenen Hohlraum (36, 37) ein gasförmiges oder flüssiges Medium befindet.

5. Scheibenwischeranlage nach Anspruch 4, dadurch gekennziechnet, daß sich das Medium in einem stationären Zustand befindet.

6. Scheibenwischeranlage nach Anspruch 4, dadurch gekennzeichnet, daß das Medium strömt.

7. Scheibenwischeranlage nach Anspruch 6, dadurch gekennzeichnet, daß das Medium Druckluft ist.

8. Scheibenwischeranlage nach Anspruch 3 und einem der Ansprüche 4 bis 7, dadurch gekennzeichnet, daß das Medium innerhalb der Dichtung (35) beheizbar ist.

9. Scheibenwischeranlage nach Anspruch 3 und Anspruch 6 oder 7, dadurch gekennzeichnet, daß das Medium außerhalb der Dichtung (35) beheizbar ist.

10. Scheibenwischeranlage nach wenigstens einem der vorhergehenden Ansprüche, dadurch gekennzeichnet, daß die Dichtung (35) wenigstens in einem Durchtrittsbereich (38, 45) des Mitnehmers (25) mit zu ihrer gedachten Achse (44) hin umgebogenen Lappen (41, 42, 46, 47) am Mitnehmer (25) anliegt.

11. Scheibenwischeranlage nach wenigstens einem der vorhergehenden Ansprüche, dadurch gekennzeichnet, daß der die Dichtung (35) bildende Hohlzylinder wenigstens in einem Durchtrittsbereich (38) des Mitnehmers (25) in Umfangsrichtung über einen gewissen Teil geschlitzt ist, so daß er hier mit zwei auf Abstand zueinander verlaufenden Lappen (41, 42) bzw. Lappenteilen am Mitnehmer (25) anliegt.

12. Scheibenwischeranlage nach wenigstens einem der vorhergehenden Ansprüche, dadurch gekennzeichnet, daß die Dichtung (35) und/oder der Führungsrahmen (18) aus geräuschdämpfendem Material besteht.

13. Scheibenwischeranlage nach Anspruch 12, dadurch gekennzeichnet, daß in Längsrichtung der Dichtung (35) an deren Außenmantelfläche (43) einstückig wenigstens ein Streifen (49) angeformt ist, welcher wenigstens bereichsweise auf der dem Scheibenwischer (29) fernen Seite (20) des Führungsrahmens (18) anliegt.

14. Scheibenwischeranlage nach wenigstens einem der vorhergehenden Ansprüche, dadurch gekennzeichnet, daß die Dichtung (35) und der Führungsrahmen (18) in einer wannenartigen Aufnahme (12) versenkt angeordnet sind, welche dem die zu wischende Scheibe (10) tragenden Gegenstand (11) zugehört.

15. Scheibenwischeranlage nach Anspruch 14, dadurch gekennzeichnet, daß die Dichtung (35) und der Führungsrahmen (18) wenigstens annähernd in der gleichen Ebene wie der Wannenrand (51) liegende Außenflächen (43, 50) besitzen.

16. Scheibenwischeranlage nach wenigstens einem der vorhergehenden Ansprüche, dadurch gekennzeichnet, daß die Dichtung (35) und der Führungsrahmen (18) rastend miteinander verbunden sind.

17. Scheibenwischeranlage nach Anspruch 14 oder 15, dadurch gekennzeichnet, daß der Mitnehmer (25) in Seitenansicht etwa Z-förmig ausgebildet ist.

18. Scheibenwischeranlage nach wenigstens einem der vorhergehenden Ansprüche, dadurch gekennzeichnet, daß sie als Horizontalwischeranlage ausgebildet ist und einen Scheibenwischer (29) besitzt, welcher an seinem unteren Ende (52) über einen nach unten aus einem Führungsrahmen (58) ragenden Mitnehmer (54) mit einem sich quer zur Scheibenwischerlängsrichtung erstreckenden Antriebsglied verbunden ist.

19. Scheibenwischeranlage nach Anspruch 18, dadurch gekennzeichnet, daß der Scheibenwischer (29) beidendig über jeweils einen aus einem Führungsrahmen (18, 58) für das Antriebsglied ragenden Mitnehmer (25, 54) mit dem Antriebsglied verbunden ist und daß im Bereich des Mitnehmers (25) für das obere Ende (33) des Scheibenwischers (29) eine Dichtung (35) gemäß einem der Ansprüche 1 bis 16 vorgesehen ist.

20. Scheibenwischeranlage nach Anspruch 18 oder 19, dadurch gekennzeichnet, daß im Austrittsbereich (66) des Mitnehmers (54) für das untere Ende (52) des Scheibenwischers (29) eine Dichtung (67) vorgesehen ist, die aus zwei einander gegenüberliegend angeordneten Streifen (68, 69) besteht.

21. Scheibenwischeranlage nach Anspruch 19 oder 20, dadurch gekennzeichnet, daß die Dichtung (67) und der Führungsrahmen (58) rastend miteinander verbunden sind.

22. Scheibenwischeranlage nach Anspruch 20 oder 21, dadurch gekennzeichnet, daß der Führungsrahmen (58) aus geräuschdämpfendem Material besteht.

23. Scheibenwischeranlage nach einem der Ansprüche 18 bis 22, dadurch gekennzeichnet, daß der Mitnehmer (54) für das untere Ende (52) des Scheibenwischers (29) in Seitenansicht etwa U-förmig ist.

24. Scheibenwischeranlage nach wenigstens einem der vorhergehenden Ansprüche, dadurch gekennzeichnet, daß der Scheibenwischer (29) einen Tragbügel (30) zur Führung wenigstens einer Wischleiste (32) aufweist, der beidseitig über jeweils einen Mitnehmer (25, 54) mit einem sich quer zur Scheibenwischerlängsrichtung erstreckendem Antriebsglied verbunden ist und daß der Tragbügel (30) gegenüber wenigstens einem Mitnehmer (25) zur gegenseitigen lagerichtigen Positionierung verschiebbar ist.

25. Scheibenwischeranlage nach Anspruch 24, dadurch gekennzeichnet, daß der Mitnehmer und der Scheibenwischer durch eine Zapfenverbindung miteinander verbunden sind.

26. Scheibenwischeranlage nach Anspruch 25, dadurch gekennzeichnet, daß sich der Zapfen in Längsrichtung des Scheibenwischers erstreckt.

27. Scheibenwischeranlage nach wenigstens einem der vorhergehenden Ansprüche, dadurch gekennzeichnet, daß der Scheibenwischer (29) zwei sich in ihrer Längsrichtung nebeneinander erstreckende Wischleisten (32) aufweist.

## Claims

1. A windshield wiper system comprising at least one windshield wiper (29) which may at least substantially linearly be moved to and from by means of a driving member extending transversely to the longitudinal direction of the windshield wiper, wherein the driving member is guided in a frame and the windshield wiper (29) is at least on one end connected with the driving member via a carrier (25) projecting from the frame and wherein in the emergence area of the carrier from the frame there is provided a seal (35), characterized in that the seal (35) is at least substantially formed as a hollow cylinder which is penetrated by the carrier (25) at least substantially diametrically.

2. A windshield wiper system according to claim 1, characterized in that the seal (35) serves in addition as a water discharge hose.

3. A windshield wiper system according to claim 1 or 2, characterized in that the seal (35) serves in addition as a heating hose.

4. A windshield wiper system according to claim 2 or 3, characterized in that in the hollow space (36, 37) enclosed by the seal (35) there is a gaseous or liquid medium.

5. A windshield wiper system according to claim 4, characterized in that the medium has a stationary condition.

6. A windshield wiper system according to claim 4, characterized in that the medium flows.

7. A windshield wiper system according to claim 6, characterized in that the medium is compressed air.

8. A windshield wiper system according to claim 3 and any one of claims 4 to 7, characterized in that the medium may be heated within the seal (35).

9. A windshield wiper system according to claim 3 and claim 6 or 7, characterized in that the medium may be heated outside the seal (35).

10. A windshield wiper system according to at least any one of the preceding claims, characterized in that at least in one emergence area (38, 45) of the carrier (25) the seal (35) rests against the carrier (25) by means of lugs (41, 42, 46, 47) bent towards its conceived axis (44).

11. A windshield wiper system according to at least any one of the preceding claims, characterized in that the hollow cylinder forming the seal (35) is slotted in the circumferential direction over a certain part in at least an emergence area (38) of the carrier (25), so that the said cylinder rests against the carrier (25) by means of two lugs (41, 42) or lug portions spaced from each other.

12. A windshield wiper system according to at least any one of the preceding claims, characterized in that the seal (35) and/or the guide frame (18) consist of noise-suppressing material.

13. A windshield wiper system according to claim 12, characterized in that in the longitudinal direction of the seal (35) at least one strip (49) is formed on the jacket surface (43), which strip at least partially rests against the guide frame (18) on the side (20) not facing the windshield wiper (29).

14. A windshield wiper system according to at least any one of the preceding claims, characterized in that the seal (35) and the guide frame (18) are submergedly arranged in a tub-shaped receiver (12) which is part of the object (11) carrying the window pane (10) to be wiped.

15. A windshield wiper system according to claim 14, characterized in that the seal (35) and the guide frame (18) have outer faces (43, 50) positioned at least substantially in the same place as the tub edge (51).

16. A windshield wiper system according to at least any one of the preceding claims, characterized in that the seal (35) and the guide frame (18) are connected with each other in a locking way.

17. A windshield wiper system according to claim 14 or 15, characterized in that in a lateral view the carrier (35) is approximately Z-shaped.

18. A windshield wiper system, especially according to at least any one of the preceding claims, characterized in that it is constructed as a horizontal wiper system and has a windshield wiper (29), which at is lower end (52) is connected with a driving member extending in the longitudinal direction of the windshield wiper by means of carrier (54) projecting downwards from a guide frame (58).

19. A windshield wiper system according to claim 18, characterized in that each of the two ends of the windshield wiper (29) is connected with the driving member via a carrier (25, 54) projecting from a guide frame (18, 58) for the driving member and that in the area of the carrier (25) for the upper end (33) of the windshield wiper (29) there is provided a seal (35) according to one of the claims 1 to 16.

20. A windshield wiper system according to claim 18 or 19, characterized in that in the emergence area (66) of the carrier (54) for the lower end (52) of the windshield wiper (29) there is provided a seal consisting of two strips (68, 69) arranged opposite to each other.

21. A windshield wiper system according to claim 19 or 20, characterized in that the seal (67) and the guide frame (58) are interconnected in a locking manner.

22. A windshield wiper system according to claim 20 or 21, characterized in that the guide frame (58) consists of noise-suppressing material.

23. A windshield wiper system according to any one of claims 18 to 22, characterized in that in a lateral view the carrier (54) for the upper end (52) of the windshield wiper (29) is approximately U-shaped.

24. A windshield wiper system, according to at least any one of the preceding claims, characterized in that the windshield wiper (29) has a supporting yoke (30) for guiding at least one wiper element (32), which supporting yoke is at both ends connected with a driving member each extending transversely to the longitudinal direction of the windshield wiper and that the supporting yoke (30) is displaceable relative to at least one carrier (25) in order to adjust the position of each other properly.

25. A windshield wiper system according to claim 24, characterized in that the carrier and the windshield wiper are interconnected by a pin connection.

26. A windshield wiper system according to claim 25, characterized in that the pin extends in the longitudinal direction of the windshield wiper.

27. A windshield wiper system according to at least any one of the preceding claims, characterized in that the windshield wiper (29) has two wiper elements (32) extending one beside the other in the longitudinal direction of the former.

**Revendications**

1. Essuie-glace comprenant au moins un balai d'essuie-glace (29) qui peut être déplacé en va-et-vient, d'une manière au moins approximativement rectiligne, à l'aide d'un organe d'entraînement s'étendant transversalement à la direction longitudinale du balai d'essuie-glace, tandis que cet organe d'entraînement est guidé dans un châssis et que, à au moins l'une de ses extrémités, la balai d'essuie-glace (29) est relié à l'organe d'entraînement par l'intermédiaire d'un entraîneur (25) faisant saillie hors du châssis, une garniture d'étanchéité (35) étant prévue dans la zone de sortie de l'entraîneur hors du châssis, caractérisé en ce que cette garniture d'étanchéité (35) est réalisée, d'une manière au moins approximative, sous la forme d'un cylindre creux qui est traversé par l'entraîneur (25) d'une manière au moins approximativement diamétrale.

2. Essuie-glace suivant la revendication 1, caractérisé en ce que la garniture d'étanchéité (35) sert en supplément de tuyau souple d'évacuation d'eau.

3. Essuie-glace suivant la revendication 1 ou 2, caractérisé en ce que la garniture d'étanchéité (35) sert en supplément de tuyau souple de chauffage.

4. Essuie-glace suivant la revendication 2 ou 3, caractérisé en ce qu'un fluide gazeux ou liquide se trouve dans la cavité (36, 37) que renferme la garniture d'étanchéité (35).

5. Essuie-glace suivant la revendication 4, caractérisé en ce que le fluide se trouve dans un état immobile.

6. Essuie-glace suivant la revendication 4, caractérisé en ce que le fluide est en circulation.

7. Essuie-glace suivant la revendication 6, caractérisé en ce que le fluide est de l'air sous pression.

8. Essuie-glace suivant la revendication 3 et l'une des revendications 4 à 7, caractérisé en ce que le fluide peut être chauffé à l'intérieur de la garniture d'étanchéité (35).

9. Essuie-glace suivant la revendication 3 et la revendication 6 ou 7, caractérisé en ce que le fluide peut être chauffé à l'extérieur de la garniture d'étanchéité (35).

10. Essuie-glace suivant au moins l'une des revendications précédentes, caractérisé en ce que, au moins dans une zone (38, 45) de traversée de l'entraîneur (25), la garniture d'étanchéité (35) s'appuie sur cet entraîneur (25) par des lèvres (41, 42, 46, 47) recourbées en direction de son axe imaginaire (44).

11. Essuie-glace suivant au moins l'une des revendications précédentes, caractérisé en ce que, au moins dans une zone (38) de traversée de l'entraîneur (25), le cylindre creux constituant la garniture d'étanchéité (35) est fendu sur une certaine profondeur suivant la direction périphérique, de sorte qu'il s'appuie sur l'entraîneur (25) par deux lèvres (41, 42), ou parties de lèvres, s'étendant à une certaine distance l'une de l'autre.

12. Essuie-glace suivant au moins l'une des revendications précédentes, caractérisé en ce que la garniture d'étanchéité (35) et/ou le châssis de guidage (18) est en une matière d'insonorisation.

13. Essuie-glace suivant la revendication 12, caractérisé en ce que, suivant la direction longitudinale de la garniture d'étanchéité (35), il est prévu, réalisée venue de matière sur la surface cylindrique extérieure (43) de cette garniture d'étanchéité, au moins une nervure (49) qui s'appuie, au moins par zones, sur la face (19) du châssis de guidage (18) qui est située à l'opposé du balai d'essuie-glace (29).

14. Essuie-glace suivant au moins l'une des revendications précédentes, caractérisé en ce que la garniture d'étanchéité (35) et le châssis de guidage (18) sont disposés d'une manière noyée dans un logement (12), en forme de cuvette, qui appartient à l'objet (11) portant la glace (10) à essuyer.

15. Essuie-glace suivant la revendication 14, caractérisé en ce que la garniture d'étanchéité (35) et le châssis de guidage (18) comportent des surfaces extérieures (43, 50) se trouvant au moins approximativement dans le même plan que le rebord (51) de la cuvette.

16. Essuie-glace suivant au moins l'une des revendications précédentes, caractérisé en ce que la garniture d'étanchéité (35) et le châssis de guidage (18) sont réunis entre eux par enclenchement.

17. Essuie-glace suivant la revendication 14 ou 15, caractérisé en ce que, en vue de côté, l'entraîneur (25) est réalisé avec une forme approximativement en Z.

18. Essuie-glace suivant au moins l'une des revendications précédentes, caractérisé en ce qu'il est réalisé sous la forme d'un essuie-glace horizontal et comprend un balai d'essuie-glace (29) qui, à son extrémité inférieure (52), est relié à un organe d'entraînement, s'étendant transversalement à la direction longitudinale du balai d'essuie-glace, par l'intermédiaire d'un entraîneur (54) faisant saillie vers le bas hors d'un châssis de guidage (58).

19. Essuie-glace suivant la revendication 18, caractérisé en ce que, à chacune de ses deux extrémités, le balai d'essuie-glace (29) est relié à l'organe d'entraînement par l'intermédiaire d'un entraîneur respectif (25, 54) faisant saillie hors d'un châssis de guidage respectif (18, 58) prévu pour l'organe d'entraînement et en ce que, dans la zone de l'entraîneur (25), il est prévu, pour l'extrémité supérieure (33) du balai d'essuie-glace (29), une garniture d'étanchéité (35) selon l'une des revendications 1 à 16.

20. Essuie-glace suivant la revendication 18 ou 19, caractérisé en ce que, dans la zone (66) de sortie de l'entraîneur (54) prévue pour l'extrémité inférieure (52) du balai d'essuie-glace (29), il est prévu une garniture d'étanchéité (67) qui consiste en deux languettes (68, 69) disposées en regard l'une de l'autre.

21. Essuie-glace suivant la revendication 19 ou 20, caractérisé en ce que la garniture d'étanchéité (67) et le châssis de guidage (58) sont réunis entre eux par enclenchement.

22. Essuie-glace suivant la revendication 20 ou 21, caractérisé en ce que le châssis de guidage (58) est en une matière d'insonorisation.

23. Essuie-glace suivant l'une des revendications 18 à 22, caractérisé en ce que, en vue de côté, l'entraîneur (54) prévu pour l'extrémité inférieure (52) du balai d'essuie-glace (29) a une forme approximativement en U.

24. Essuie-glace suivant au moins l'une des revendications précédentes, caractérisé en ce que le balai d'essuie-glace (29) comprend une raclette de balai (30) qui sert au guidage d'au moins une lame de balai (32) et qui, sur chacun de ses deux côtés, est reliée, par l'intermédiaire d'un entraîneur respectif (25, 54), à un organe d'entraînement s'étendant transversalement à la direction longitudinale du balai d'essuie-glace et en ce que cette raclette de balai (30) peut être déplacée en translation au moins par rapport à un entraîneur (25) en vue d'un positionnement relatif exact.

25. Essuie-glace suivant la revendication 24, caractérisé en ce que l'entraîneur et le balai d'essuie-glace sont réunis entre eux par une jonction par doigt et trou.

26. Essuie-glace suivant la revendication 25, caractérisé en ce que le doigt s'étend suivant la direction longitudinale du balai d'essuie-glace.

27. Essuie-glace suivant au moins l'une des revendications précédentes, caractérisé en ce que le balai d'essuie-glace (29) comprend deux lames de balai (32) s'étendant l'une à côté de l'autre suivant leur direction longitudinale.

Fig. 1

Fig. 2